# EUROPÄISCHE PATENTSCHRIFT

(11) **EP 0 856 246 B1**
(45) Veröffentlichungstag und Bekanntmachung des Hinweises auf die Patenterteilung: **16.04.2003**
(21) Anmeldenummer: 98100939.2
(22) Anmeldetag: 21.01.1998
(51) Int. Cl.: A01D 43/08

(54) **Nachzerkleinerungsvorrichtung**
Secondary crusher
Broyeuse secondaire

(30) Priorität: 31.01.1997 DE 19703486
(43) Veröffentlichungstag der Anmeldung: 05.08.1998
(73) Patentinhaber: DEERE & COMPANY, Moline, Illinois 61265-8098 (US)
(72) Erfinder: Vogelgesang, Claus-Joseph, 66399 Mandelbachtal (DE)
(74) Vertreter: Magin, Ludwig Bernhard

(56) Entgegenhaltungen:
- DE-A- 2 621 292
- DE-A- 4 122 338
- DE-A- 4 218 591
- DE-A- 4 427 624
- DE-U- 8 302 421
- FR-A- 1 412 195
- FR-A- 2 536 630
- FR-A- 2 631 776
- US-A- 2 513 155
- US-A- 5 048 767
- US-A- 5 059 111

## Beschreibung

Die Erfindung betrifft eine Nachzerkleinerungsvorrichtung für gehäckseltes Ernte-gut mit wenigstens zwei Walzen, wobei die Walzen mit zueinander und zu einer Rotationsachse parallel verlaufenden Umfangsflächen versehen sind, jede der Walzen Abschnitte kleinen und Abschnitte großen Durchmessers aufweist, die in Abschnitte großen und Abschnitte kleinen Durchmessers der jeweils gegenüberliegenden Walze unter Bildung einer Scherkante an den Stirnseiten eintreten und Umfangsflächen der Walzen ein Zahnprofil besitzen.

Aus der DE-OS-41 22 338 geht eine Nachzerkleinerungsvorrich-tung mit zwei Walzen hervor, die um zueinander parallel verlaufende Achsen drehen und zwischen sich einen Spalt belassen, der so groß ist, daß in einem gehäckselten Erntegut noch enthaltene Körner, z. B. Maiskörner, zerrieben oder wenigstens angedrückt werden, so daß sie besser verdaut werden können. Jede dieser Walzen setzt sich aus einer Mehrzahl doppelkeilförmiger Abschnitte zusammen, die zwischen sich ein keilförmiges Tal belassen, in das jeweils ein Abschnitt der gegenüberliegenden Walze eintreten kann. Mit dieser Bauweise soll eine vergrößerte Profiloberfläche erzeugt werden, die weniger verstopfungs-anfällig ist und einen besseren Durchsatz erbringt.

Der mit dieser Bauart verbundene Herstellungsaufwand ist unangemessen hoch.

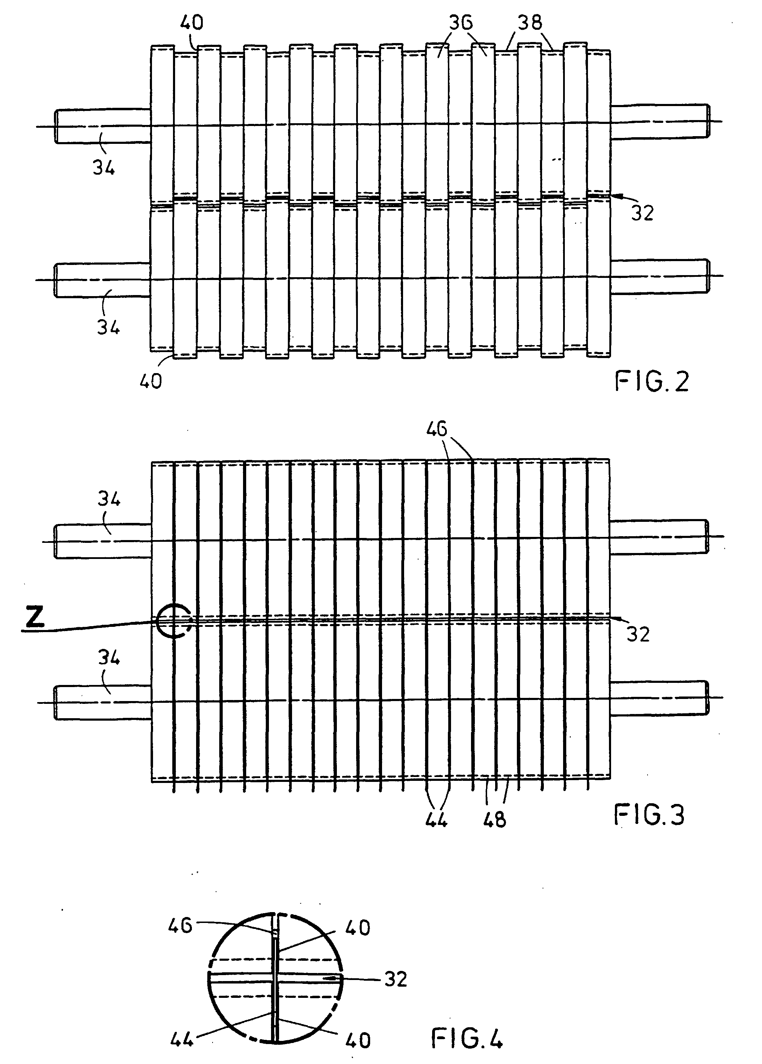

Die DE-OS-26 21 292 offenbart am Beispiel eines angebauten Maishäckslers in dem Ausführungsbeispiel nach den Figuren 3 und 4 zwei miteinander kämmende Walzen, die auf ihrer Länge eine Vielzahl von außengezahnten Scheiben aufweisen, die einen Abstand zueinander aufweisen. Auf der gegenüberliegenden Walze befestigte in gleicher Weise ausgebildete Scheiben treten in die Abstände zwischen den Scheiben der diesseitigen Walze ein. Zwischen der Außenfläche der Scheiben einerseits und der Außenfläche der Walze in dem Bereich des Tals andererseits besteht ein Spalt, der ein Aufschließen im Erntegut enthaltener Körner verhindert.

Das der Erfindung zugrunde liegende Problem wird darin gesehen, daß die bekannten Lösungen einerseits einen hohen Fertigungsaufwand bedingen, andererseits aber dünne Blätter, wie Lieschen, durch den Spalt passieren lassen, ohne sie zu zerkleinern. Außerdem sollen die in dem Gut enthaltenen Körner angequetscht und somit aufgeschlossen werden. Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise werden Blätter und dergleichen an den Scherkanten zerschnitten oder zerrissen und verbleiben nicht als Ganzes in dem Erntegut und späteren Futter. Das Erntegut läßt sich somit auf seinem Förderweg, insbesondere innerhalb eines Gebläses, besser transportieren und stellt eine noch homogenere Masse dar als bisheriges Erntegut. Dadurch, daß die Abschnitte sehr nahe aneinander abrollen, werden auch die in dem Gut enthaltenen Körner angequetscht und somit aufgeschlossen, was schließlich zu einer guten Verdauung führt.

Unter den verschiedenen möglichen Ausführungsformen ist die Verwendung von Schneidscheiben auf einer Walze, die in Schlitze auf der anderen Walze eintreten, sehr einfach und wirkungsvoll. Die Abschnitte größeren Durchmessers der einen Walze und die Abschnitte kleineren Durchmessers der anderen Walze können mit dem gleichen Außendurchmesser ausgebildet werden, wobei dann sinnvollerweise die Walzen mit unterschiedlichen Geschwindig-keiten umlaufen, um einen zusätzlichen Spleißeffekt zu erreichen. Allerdings können die Walzen bei gleicher Umlauf-geschwindigkeit auch von unterschiedlichem Außendurchmesser sein. Schließlich ergibt sich bei Abschnitten unterschiedlichen Außendurchmessers bei gleicher Drehzahl immer eine Geschwindig-keitsdifferenz. Die schlitzförmigen Abschnitte kleinen Durch-messers können als kleine Rillen in eine Walze eingedreht, bzw. eingestochen werden oder durch Distanzscheiben zwischen zwei benachbarten Abschnitten einer Walze gebildet werden. Anderenfalls können bei getrennten Abschnitten, die neben-einander angeordnet werden, bei einem oder beiden Abschnitten auch im Seitenbereich Ausnehmungen angefast werden.

Der Schneideffekt wird längstmöglich erhalten, wenn als Schneidscheiben ausgebildete Abschnitte großen Durchmessers an den als Schlitzen ausgebildeten Abschnitten kleinen Durchmessers entlang gleiten, was z. B. durch einen geringfügigen axialen Versatz beider Walzen oder der Abschnitte erreichbar ist.

Wenn die Schneidscheiben wenigstens um die Zahnhöhe in die Schlitze eintreten wird der erfindungsgemäße Erfolg bereits erreicht, obwohl die Fertigungskosten gering bleiben. Allerdings ist darauf zu achten, daß bei unterschiedlichen Spaltweiten zwischen beiden Walzen diese Bedingung stets, d. h. auch bei großer Spaltweite, eingehalten wird.

Nach einer anderen Ausführungsform wird die Scherkante an den Stirnseiten oder Seitenflächen zweier vorzugsweise gleich breiter Abschnitte sich gegenüberliegender Walzen gebildet. In diesem Fall gleiten die Seitenflächen mit geringstmöglichem Abstand aneinander und zerschneiden evtl. im Futter enthaltene Blätter. Diese Lösung ist sehr vorteilhaft, weil mit nur zwei im Durchmesser unterschiedlich ausgebildeten Abschnitten die Erfindung im wesentlichen verwirklicht werden kann. Diese Ausführungsform ist besonders dort von Vorteil, wo mit Fremdkörpern im Gut gerechnet werden muß, die stabile Bauelemente erfordern. Abweichend hiervon können die Abschnitte auch unterschiedlich breit ausgebildet werden, so z. B. breitere Abschnitte im Außenbereich als im Innenbereich, wenn im Außenbereich nicht mit Blättern zu rechnen ist - oder umgekehrt.

Walzen unterschiedlicher Breite können in Modulbautechnik gebildet werden, wenn die Abschnitte als Vollscheiben ausgebildet sind und durch Spannschrauben auf einer Welle zusammengefaßt werden. Je nach der Anzahl der Abschnitte ergeben sich unterschiedliche Walzenbreiten.

Aus herstellungstechnischer und festigkeitsmäßiger Sicht erscheint es sinnvoll, die Abschnitte als Ringe auszubilden und auf eine Trägerrolle aufzuschieben und mit dieser zu verbinden. Auf diese Weise wird die Kraft und die Drehbewegung insbesondere von der Trägerrolle übertragen, während die für die Gutzerkleinerung erforderlichen Qualitäten in den Ringen, d. h. den jeweiligen Abschnitten verwirklicht werden.

In der Zeichnung sind zwei nachfolgend näher beschriebene Ausführungsbeispiele der Erfindung dargestellt. Es zeigt:
- Fig. 1: eine Erntemaschine mit einem Satz erfindungsgemäßer Walzen in Seitenansicht und in schematischer Darstellung und
- Fig. 2: ein Paar erfindungsgemäßer Walzen in Vorderansicht nach einem ersten Ausführungsbeispiel,
- Fig. 3: ein Paar erfindungsgemäßer Walzen in Vorderansicht nach einem zweiten Ausführungsbeispiel, und
- Fig. 4: einen Ausschnitt zweier Walzen nach Figur 3 gemäß dem eingezeichneten Kreis in vergrößerter Darstellung.

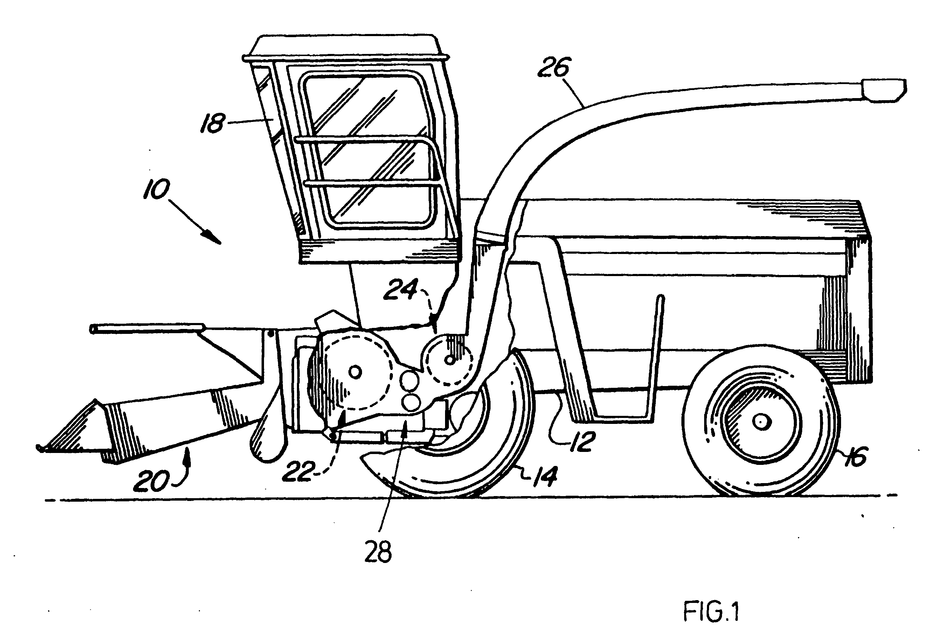

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Emtegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verläßt die Erntemaschine 10 zu einem nebenher fahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Weitere Einzelheiten der Erntemaschine 10 bedürfen keiner Beschreibung, weil diese an sich bekannt ist. Die Lage der Nachzerkleinerungsvorrichtung 28 ist jedoch nicht entscheidend, so daß sie auch stromabwärts der Fördervorrichtung 24 vorgesehen werden kann.

Die erfindungsgemäße Nachzerkleinerungsvorrichtung 28 wird im wesentlichen von zwei Walzen 30 gebildet, deren Drehachsen parallel zueinander verlaufen und die zwischen sich einen Spalt 32 belassen, durch den das geförderte Erntegut hindurchtritt.

Die beiden Walzen 30 können mit der gleichen oder unterschiedlichen Geschwindigkeit drehen und dienen dazu, das den Spalt 32 passierende Gut anzuquetschen und/oder weiter zu zerkleinern.

Der Spalt 32 kann je nach den Erntebedingungen unterschiedlich weit eingestellt werden, wozu in der Zeichnung nicht abgebildete aber im Stand der Technik bekannte Vorrichtungen verwendet werden.

Jede Walze 30 enthält eine durchgehende Welle 34; stattdessen können auch Wellenstummel oder nur über einen Teil der Länge verlaufende Wellen verwendet werden. Beide Wellen 34 sind mit einem nicht gezeigten Antriebsrad bestückt, über das die Walzen 30 in entgegengesetzter Richtung in Drehung versetzt werden. Die Wellen 34 sind endseitig in nicht gezeigten Lagern eines Trägers oder in Seitenwänden eines Gehäuses drehbar aufgenommen.

Ferner ist jede Walze 30 mit einer Vielzahl von Abschnitten großen Durchmessers 36 und Abschnitten kleinen Durchmessers 38 versehen, die koaxial zu der Drehachse der Welle 34 angeordnet sind und auf der Gesamtlänge eine geschlossene Oberfläche bilden, die der Gutbearbeitung dienen.

Die Abschnitte großen und kleinen Durchmessers 36 und 38 schließen endseitig aneinander an und sind mittels nicht gezeigter Spannschrauben, Spannanker, Keilen, Spannmuttern oder dergleichen auf der Welle 34, aneinander oder auf einer nicht gezeigten Trägerrolle befestigt.

Die Anordnung der Abschnitte großen bzw. kleinen Durchmessers 36, 38 ist so getroffen, daß sie radial jeweils gleiche Abmessungen besitzen. Weiterhin sind die jeweiligen Abschnitte 36, 38 zueinander versetzt angeordnet, so daß sie ineinander eingreifen, d. h., daß der Abschnitt großen Durchmessers 36 der einen Walze 34 gegenüber dem Abschnitt kleinen Durchmessers 38 der gegenüberliegenden Walze 30 zu liegen kommt und in dieses Tal eintaucht. Die Verzahnung der Abschnitte 36, 38 erfolgt so, daß Stirnseiten 40 benachbarter Abschnitte 36, 38 mit geringstmöglichem Spalt oder gar ohne Spalt aneinanderreiben, so daß sich eine Scherkante beim Zusammentreffen der Stirnseiten 40 ergibt.

Gemäß dem Ausführungsbeispiel nach Figur 2 sind die Abschnitte kleinen und großen Durchmessers 36 und 38 gleich breit ausgebildet, und beide sind auf ihrer Umfangsfläche mit einem Zahnprofil 42 versehen. Das Zahnprofil 42 ist so ausgebildet, daß die Zahnlücken kleiner sind als in dem Gut enthaltene Körner, so daß in den Spalt 32 zwischen gegenüberliegenden Walzen 30 eintretende Körner, z. B. Maiskörner, angequetscht werden. Die Zahntiefe beträgt ca. 5 mm, die Durchmesserdifferenz beider Abschnitte demgemäß mindestens 10 mm und die Breite der Abschnitte ca. 25 mm. Die Zähne und Zahnlücken erstrecken sich in der Längsrichtung der Welle 34 und Walze 30 und verlaufen zu denen der gegenüberliegenden Walze 30 parallel.

Da die Abschnitte 36 und 38 gleich breit sind, gleiten deren Stirnflächen 40 aneinander.

In dem bevorzugten Ausführungsbeispiel nach Figur 2 bestehen die Abschnitte 36 und 38 aus Vollmaterial und erstrecken sich von dem Zahnprofil 42 bis zu der Welle 34, auf der sie mittelbar oder unmittelbar drehfest befestigt sind. Allerdings sind die Abschnitte 36, 38 nur im Bereich ihres Zahnprofils gehärtet. Nach einer ersten Abweichung könnten die Abschnitte 36, 38 in dem Bereich zwischen dem Zahnprofil 42 und der Welle 34 auch als Speichen ausgebildet sein. Nach einer anderen Abweichung sind die Abschnitte 36, 38 als Ringe ausgebildet, die auf eine Trägerrolle mit relativ großem Außendurchmesser aufgeschoben und befestigt sind. Wichtig ist, daß sich jeweils ein Abschnitt kleinen Durchmessers 36 mit einem Abschnitt großen Durchmessers 38 abwechselt.

Bei dem Ausführungsbeispiel nach Figur 3 werden die Abschnitte großen Durchmessers 38 von Schneidscheiben 44 gebildet, die auf einer Walze 30 angeordnet sind und in Schlitze 46 auf der anderen Walze 30 eintauchen. Zwischen den Abschnitten großen bzw. kleinen Durchmessers 36, 38 erstrecken sich mit dem Zahnprofil 42 versehene Abschnitte 48. In diesem Fall besitzen die Abschnitte 48 mit Zahnprofil 42 denselben Außendurchmesser.

Die Schneidscheiben 44 haben einen um ca. 2 bis 10 mm größeren Außendurchmesser als die Abschnitte 48 mit Zahnprofil 42 und sind relativ dünn. Die Schneidscheiben 44 sind vorzugsweise als Stahlblechscheiben ausgebildet und zwischen den Abschnitten 48 mit Zahnprofil 42 koaxial eingefügt und von diesen axial und radial festgelegt.

Die Schlitze 46 befinden sich zwischen zwei benachbarten Abschnitten 48 mit Zahnprofil 42 und können auf verschiedene Weise gebildet werden. Nach einer Möglichkeit sind die Abschnitte 48 mit Zahnprofil 42 unabhängig voneinander ausgebildet und werden mittels nicht gezeigter Distanzscheiben, deren Breite der der Schneidscheiben 44 entspricht, auf Abstand zueinander gehalten, wobei die Distanzscheiben einen geringeren Außendurchmesser besitzen als die Abschnitte 48 mit Zahnprofil 42. Nach einer weiteren Möglichkeit sind die Abschnitte 48 mit Zahnprofil 42 im Außenbereich ihrer Stirnseiten 40 entweder auf einer oder auf beiden Seiten mit einer Nut oder einer Fase versehen, in die eine Schneidscheibe 44 mit ihrem überstehenden Bereich eintreten kann. Schließlich können die Schlitze 46 auch in die Oberfläche eines sich über die gesamte Länge der Walze 30 erstreckenden Abschnitts 48 mit Zahnprofil 42 eingestochen oder eingesägt werden.

Die Schneidscheiben 44 gleiten derart an den Stirnseiten der Abschnitte 48, d. h. den die Schlitze 46 begrenzenden Wänden, daß sich ein Selbstschärfeffekt ergibt. Der Mittenabstand der Schlitze 46 beträgt im vorliegenden Ausführungsbeispiel ca. 25 mm.

Die beiden Ausführungsbeispiele lassen klar erkennen, daß Blätter oder Lieschen, die durch den Spalt 32 gelangen auf eine Länge zerkleinert werden, die dem Abstand der Stirnseiten 40 entspricht, weil sie an den dort bestehenden Scherkanten zerschnitten werden.

## Patentansprüche

1. Nachzerkleinerungsvorrichtung (28) für gehäckseltes Erntegut mit wenigstens zwei Walzen (30), wobei die Walzen (30) mit zueinander und zu einer Rotationsachse parallel verlaufenden Umfangsflächen versehen sind, jede der Walzen (30) Abschnitte kleinen und Abschnitte großen Durchmessers (38, 36) aufweist, die in Abschnitte großen und Abschnitte kleinen Durchmessers (36, 38) der jeweils gegenüberliegenden Walze (30) unter Bildung einer Scherkante an den Stirnseiten (40) eintreten und Umfangsflächen der Walzen (30) ein Zahnprofil besitzen, **dadurch gekennzeichnet, dass** sich gegenüberliegende Umfangsflächen der Walzen (30) ein Zahnprofil besitzen und zueinander einen Spalt (32) aufweisen, der kleiner ist als in dem Erntegut enthaltene Körner.

2. Nachzerkleinerungsvorrichtung nach Anspruch 1, **dadurch gekennzeichnet, daß** die Abschnitte großen Durchmessers (36) auf einer Walze (30) als Schneidscheiben (44) und die Abschnitte kleinen Durchmessers (38) der gegenüberliegenden Walze (30) als Schlitze (46) ausgebildet sind.

3. Nachzerkleinerungsvorrichtung nach Anspruch 2, **dadurch gekennzeichnet, daß** die Schneidscheiben (44) selbstschärfend an die Schlitze (46) begrenzenden Wänden gleiten.

4. Nachzerkleinerungsvorrichtung nach Anspruch 2 oder 3, **dadurch gekennzeichnet, daß** die Eindringtiefe der Schneidscheiben (44) in die Schlitze (46) wenigstens der Zahnhöhe des Zahnprofils entspricht.

5. Nachzerkleinerungsvorrichtung nach Anspruch 1, **dadurch gekennzeichnet, daß** die Abschnitte großen und kleinen Durchmessers (36) und (38) von vorzugsweise gleich breiten Abschnitten (36, 38, 48) mit Zahnprofil (42) auf der Umfangsfläche gebildet werden.

6. Nachzerkleinerungsvorrichtung nach Anspruch 5, **dadurch gekennzeichnet, daß** sich die Abschnitte großen und kleinen Durchmessers (36) und (38) über den jeweiligen gesamten Durchmesser erstrecken und auf einer Welle (34) befestigt oder mit Spannschrauben verbunden axial zu einer Walze (30) zusammengesetzt sind.

7. Nachzerkleinerungsvorrichtung nach Anspruch 5, **dadurch gekennzeichnet, daß** die Abschnitte großen und kleinen Durchmessers (36, 38) als außenprofilierte Ringe unterschiedlichen Außendurchmessers gebildet sind, die auf eine Trägerrolle vorzugsweise formschlüssig aufgesetzt sind.

## Claims

1. A re-crushing device (28) for chopped harvested crop, with at least two rolls (30), wherein the rolls (30) are provided with peripheral surfaces running parallel to one another and to an axis of rotation, each of the rolls (30) having sections of small and sections of large diameter (38, 36) which enter into sections of large and sections of small diameter (36, 38) of the respective opposite roll (30) to form a shearing edge at the face sides (40), and wherein peripheral surfaces of the rolls (30) have a toothed profile, **characterized in that** opposite peripheral surfaces of the rolls (30) have a toothed profile and have a gap (32) between them which is smaller than the grains contained in the harvested crop.

2. A re-crushing device according to claim 1, **characterized in that** the sections of large diameter (36) on one roll (30) are in the form of cutting discs (44) and the sections of small diameter (38) of the opposite roll (30) are in the form of slots (46).

3. A re-crushing device according to claim 2, **characterized in that** the cutting discs (44) slide for self sharpening on the walls bounding the slots (46).

4. A re-crushing device according to claim 2 or 3, **characterized in that** the depth of penetration of the cutting discs (44) into the slots (46) corresponds at least to the tooth height of the toothed profile.

5. A re-crushing device according to claim 1, **characterized in that** the sections of large and small diameter (36) and (38) are formed from sections (36, 38, 48) preferably of the same width with a toothed profile (42) on the peripheral surface.

6. A re-crushing device according to claim 5, **characterized in that** the sections of large and small diameter (36) and (38) extend over the respective total diameter and are fixed on a shaft (34) or are assembled to roll (30) connected axially by clamping screws.

7. A re-crushing device according to claim 5, **characterized in that** the sections of large and small diameter (36, 38) are formed by externally profiled rings of different outer diameters, which are fitted on a support roll, preferably interlocked therewith.

## Revendications

1. Dispositif de broyage secondaire (28) pour du produit de la récolte haché, présentant au moins deux rouleaux (30), les rouleaux (30) étant pourvus de surfaces périphériques s'étendant parallèlement l'une à l'autre et à un axe de rotation, chacun des rouleaux (30) présentant des segments de petit diamètre et des segments de grand diamètre (38, 36), qui entrent dans des segments grand diamètre et des segments de petit diamètre (36, 38) du rouleau respectivement opposé (30) en créant une arête de coupe sur les faces frontales (40) et les surfaces périphériques des rouleaux (30) présentant un profil denté, **caractérisé en ce que** des surfaces périphériques opposées des rouleaux (30) présentent un profil denté et un jeu (32) entre elles qui est plus petit que des grains contenus dans le produit de la récolte.

2. Dispositif de broyage secondaire selon la revendication 1, **caractérisé en ce que** les segments de grand diamètre (36) sont réalisés en forme de disques coupants (44) sur un rouleau (30) et que les segments de petit diamètre (38) du rouleau opposé sont réalisés en forme de fentes (46).

3. Dispositif de broyage secondaire selon la revendication 2, **caractérisé en ce que** les disques coupants (44) glissent contre les parois délimitant les fentes (46) de façon à s'auto-aiguiser.

4. Dispositif de broyage secondaire selon la revendication 2 ou 3, **caractérisé en ce que** la profondeur de pénétration des disques coupants (44) dans les fentes (46) correspond au moins à la hauteur des dents du profil denté.

5. Dispositif de broyage secondaire selon la revendication 1, **caractérisé en ce que** les segments de grand et de petit diamètre (36) et (38) sont de préférence formés par des segments (36, 38, 48) d'une même longueur présentant un profil denté (42) sur leur surface périphérique.

6. Dispositif de broyage secondaire selon la revendication 5, **caractérisé en ce que** les segments de grand et de petit diamètre ((36) et (38) s'étendent sur la totalité de chaque diamètre et sont fixées sur un arbre (34) ou assemblés axialement, liés par des vis de serrage, à un rouleau (30).

7. Dispositif de broyage secondaire selon la revendication 5, **caractérisé en ce que** les segments de grand et de petit diamètre (36, 38) sont formés d'anneaux profilés à l'extérieur, de diamètres extérieurs différents, qui sont posés sur un rouleau porteur de préférence de façon solidaire.
